# FASCICULE DE BREVET EUROPEEN

(11) **EP 1 888 893 B1**
(45) Date de publication et mention de la délivrance du brevet: **13.07.2011**
(21) Numéro de dépôt: 06764683.6
(22) Date de dépôt: 24.05.2006
(51) Int. Cl.: F02B 29/04

(54) **REFROIDISSEUR D'AIR D'ADMISSION POUR UN MOTEUR THERMIQUE TURBOCOMPRESSE A DEUX ETAGES DE SURALIMENTATION ET CIRCUIT D'AIR CORRESPONDANT**
EINLASSLUFTKÜHLER FÜR EINEN ZWEISTUFIGEN TURBOLADER- UND TURBOKOMPRIMIERUNGSMOTOR SOWIE ENTSPRECHENDE DRUCKLUFTSCHALTUNG
INTAKE AIR COOLER FOR DUAL-STAGE TURBOCHARGING TURBOCOMPRESSED HEAT ENGINE AND CORRESPONDING AIR CIRCUIT

(30) Priorité: 31.05.2005 FR 0505469
(43) Date de publication de la demande: 20.02.2008
(73) Titulaire: VALEO SYSTEMES THERMIQUES, 78321 Le Mesnil St Denis Cedex (FR)
(72) Inventeur: MARTINS, Carlos, 78150 Le Chesnay (FR); POTIER, Michel, 78120 Rambouillet (FR)
(86) Numéro de dépôt international: PCT/FR2006/001191
(87) Numéro de publication internationale: WO 2006/128995

(56) Documents cités:
- AT-U1- 6 106
- FR-A- 2 843 449
- FR-A1- 2 372 961
- US-A1- 2003 115 876

## Description

L'invention se rapporte aux équipements des moteurs thermiques des véhicules automobiles.

Elle concerne plus particulièrement un refroidisseur d'air d'admission pour un moteur thermique turbocompressé à deux étages de suralimentation, ainsi qu'un circuit d'air d'admission comportant un tel refroidisseur.

Pour améliorer la performance des moteurs thermiques, notamment à bas régime, il est connu d'avoir recours à deux étages de suralimentation comportant respectivement un premier compresseur et un deuxième compresseur. Le premier compresseur, ou compresseur amont, comprime l'air d'admission à basse pression, tandis que le second compresseur, ou compresseur aval, comprime l'air d'admission à haute pression. Les deux étages de suralimentation peuvent comprendre un turbocompresseur associé à un compresseur mécanique ou électrique, ou encore deux turbocompresseurs de taille et de rapport de compression différents.

L'air d'admission ainsi comprimé, appelé aussi air de suralimentation, est échauffé du fait de sa compression et doit être refroidi au moyen d'un échangeur de chaleur approprié, appelé refroidisseur d'air de suralimentation.

Dans le cas d'un moteur thermique turbocompressé à deux étages de suralimentation, l'air échauffé par compression peut être refroidi par un seul échangeur de chaleur, ou encore par deux échangeurs de chaleur montés en sortie de chaque compresseur, lorsque ces derniers sont montés en série. Cette architecture connue améliore le rendement et protège la roue d'entraînement du second compresseur lorsque la température en sortie du premier compresseur est trop élevée (voir AT 006106 U1).

Le recours à deux échangeurs de chaleur, non seulement engendre un surcoût, mais aussi pénalise l'aéraulique, et cela d'autant plus que les échangeurs de chaleur sont généralement montés à l'avant du véhicule.

L'invention a notamment pour but de surmonter les inconvénients précités.

Elle propose à cet effet un refroidisseur d'air d'admission du type défini précédemment, qui comprend un premier étage de refroidissement et un second étage de refroidissement regroupés dans un seul boîtier d'échangeur de chaleur et partageant un faisceau d'échangeur de chaleur commun, logé dans le boîtier d'échangeur de chaleur et traversé par un liquide de refroidissement.

Ainsi, l'invention permet de regrouper les deux étages de refroidissement au sein d'un même boîtier, tout en partageant un même faisceau d'échangeur de chaleur, ledit boîtier étant traversé par de l'air d'admission, l'air de suralimentation circulant notamment en série..

Cette solution présente un certain nombre d'avantages, notamment un moindre coût, une perte de charge réduite sur la ligne d'air d'admission et un encombrement réduit. Elle est en outre compatible avec un fonctionnement à deux compresseurs ou à un seul compresseur.

Dans un mode de réalisation préféré, le premier étage de refroidissement et le second étage de refroidissement comprennent respectivement un premier conduit et un second conduit séparés par une cloison et présentant chacun une entrée et une sortie pour l'air d'admission, le faisceau d'échangeur de chaleur comprenant une première partie et une seconde partie logées respectivement dans le premier conduit et le second conduit.

Dans une forme de réalisation, l'entrée et la sortie du premier conduit sont opposées respectivement à l'entrée et à la sortie du second conduit de sorte que l'air d' admission y circule dans des sens opposés, tandis que le faisceau d'échangeur de chaleur est agencé pour que le liquide de refroidissement circule successivement dans la première partie et la seconde partie du faisceau d'échangeur de chaleur.

Dans une autre réalisation, l'entrée et la sortie du premier conduit sont respectivement du même côté que l'entrée et la sortie du second conduit, de sorte que l'air d'admission y circule dans le même sens, tandis que le faisceau d'échangeur de chaleur est agencé pour que le liquide de refroidissement circule simultanément dans la première partie et la seconde partie du faisceau d'échangeur de chaleur.

Dans tous les cas, il est avantageux que le faisceau d'échangeur de chaleur soit agencé pour que le liquide de refroidissement circule en sens opposé à l'air d'admission aussi bien dans la première partie que dans la seconde partie du faisceau d'échangeur de chaleur.

De manière avantageuse, le faisceau d'échangeur de chaleur comprend un empilement de plaques et d'intercalaires ondulés délimitant des lames de circulation du liquide de refroidissement, alternant avec les canaux de circulation de l'air d'admission.

Pour améliorer l'échange thermique, les lames de circulation du liquide de refroidissement, formées chacune entre deux plaques contiguës, délimitent avantageusement un parcours de circulation ayant la forme d'au moins un U.

Selon une autre caractéristique de l'invention, la cloison précitée peut être formée par le boîtier et/ou le faisceau.

Dans une première variante, la cloison est une cloison fixe.

Dans une deuxième variante, la cloison comporte une partie fixe et au moins une partie mobile déplaçable entre une première position en laquelle le premier conduit et le second conduit sont isolés et une seconde position en laquelle le premier conduit et le second conduit communiquent.

Dans une forme de réalisation, les entrées d'air respectives du premier conduit et du second conduit sont disposées à des extrémités opposées du boîtier d'échangeur de chaleur, tandis que la cloison comprend une seule partie mobile située à l'une des extrémités du boîtier d'échangeur de chaleur.

Dans une autre forme de réalisation, les entrées d'air respectives du premier conduit et du second conduit sont disposées à une même extrémité du boîtier d'échangeur de chaleur, tandis que la cloison comprend deux parties mobiles situées respectivement aux deux extrémités du boîtier d'échangeur de chaleur.

La partie mobile est avantageusement un volet pivotant.

Sous un autre aspect, l'invention concerne un circuit d'air d'admission pour un moteur thermique turbocompressé à deux étages de suralimentation comprenant un compresseur amont, fonctionnant à basse pression, et un compresseur aval, fonctionnant à haute pression, ce circuit comprenant en outre un refroidisseur d'admission selon l'invention.

En ce cas, le premier étage de refroidissement est interposé entre le compresseur amont et le compresseur aval, tandis que le second étage de refroidissement est relié en sortie du compresseur aval.

Dans le cas où le refroidisseur d'air d'admission est muni d'une cloison avec au moins une partie mobile, le circuit peut admettre deux positions correspondant aux positions de cette partie mobile.

Dans la première position précitée, l'air d'admission est propre à passer successivement par le compresseur amont, le premier étage de refroidissement, le compresseur aval, puis le second étage de refroidissement. Dans ce cas, les deux compresseurs sont utilisés.

Dans la seconde position précitée, l'air d'admission est propre à passer successivement par le compresseur amont, le premier étage de refroidissement, puis le second étage de refroidissement en contournant ainsi le compresseur aval.

Autrement dit, seul le compresseur amont est alors utilisé.

Dans la description qui suit, faite seulement à titre d'exemple, on se réfère aux dessins annexés sur lesquels :
- la figure 1 représente schématiquement un moteur thermique dont le circuit d'air d'admission comprend un refroidisseur d'air d'admission selon l'invention ;
- la figure 2 est une vue d'extrémité d'un refroidisseur d'air d'admission dans une première forme de réalisation de l'invention, dans laquelle l'air d'admission circule à contre-courant dans les étages de suralimentation ;
- la figure 3 est une vue en coupe selon la ligne III-III de la figure 2
- la figure 4 est une vue en coupe selon la ligne IV-IV de la figure 2 ;
- la figure 5 est une vue en coupe selon la ligne V-V de la figure 2 ;
- la figure 6 est une vue d'extrémité d'un refroidisseur d'air d'admission selon une deuxième forme de réalisation de l'invention, dans laquelle l'air d'admission circule dans le même sens dans les étages de suralimentation ;
- la figure 7 est une vue en coupe selon la ligne VII-VII de la figure 6 ;
- la figure 8 est une vue en coupe selon la ligne VIII-VIII de la figure 6 ;
- la figure 9 représente schématiquement un moteur thermique dont le circuit d'admission comprend un refroidisseur d'air d'admission dont la cloison comporte une partie mobile, pour un mode de fonctionnement où les deux compresseurs sont actifs ;
- la figure 10 est une vue analogue à la figure 9 pour un autre mode de fonctionnement où seul l'un des deux compresseurs est actif ;
- la figure 11 est une vue en coupe du boîtier du refroidisseur d'air d'admission du circuit des figures 9 et 10 montrant la partie mobile de la cloison ;
- la figure 12 représente schématiquement un moteur thermique avec son circuit d'air d'admission comportant un refroidisseur d'air d'admission selon l'invention dans une autre forme de réalisation où la cloison comporte deux parties mobiles, le circuit étant représenté dans un mode de fonctionnement où les deux compresseurs sont actifs ;
- la figure 13 est une vue analogue à la figure 12 dans un mode où seul l'un des deux compresseurs est actif ; et
- la figure 14 est une vue en coupe du refroidisseur d'air d'admission des figures 12 et 13 montrant les deux parties mobiles de la cloison.

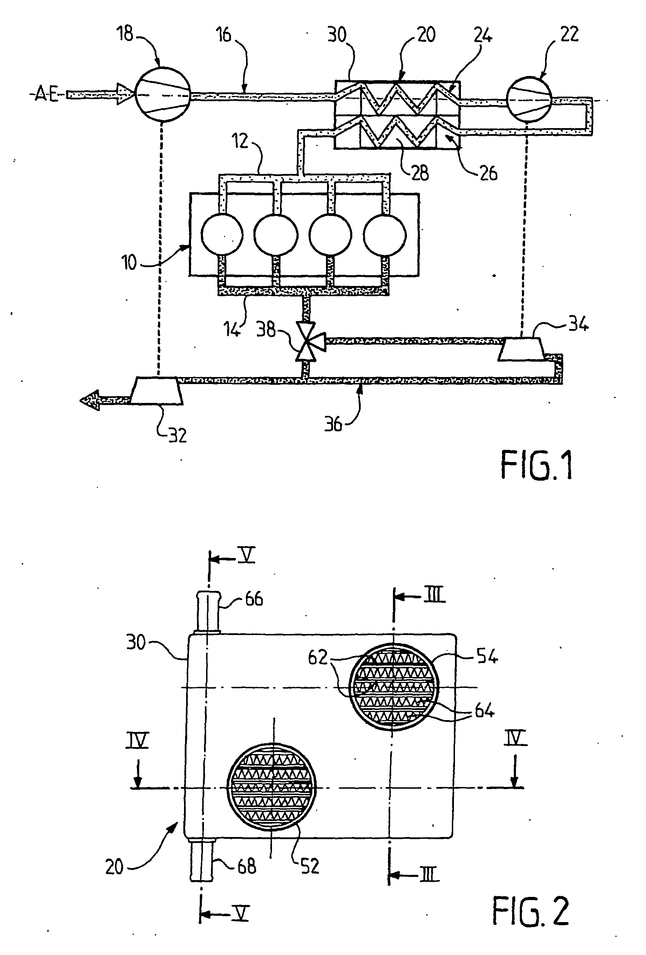

On se réfère d'abord à la figure 1 qui représente un moteur thermique 10, par exemple un moteur de véhicule automobile, comportant un collecteur d'admission 12 et un collecteur d'échappement 14. Le collecteur d'admission 12 est alimenté par un circuit d'air d'admission 16, encore appelé ligne d'admission, par de l'air extérieur AE. Ce circuit 16 comprend un compresseur amont 18, un refroidisseur d'air d'admission 20 (appelé aussi "refroidisseur" pour simplifier) et un compresseur aval 22.

Le refroidisseur 20 comporte un premier étage de refroidissement 24 et un second étage de refroidissement 26 partageant un faisceau d'échangeur de chaleur 28 commun, l'ensemble étant regroupé dans un même boîtier 30, les deux étages de refroidissement 24 et 26 étant traversés par de l'air extérieur et/ou d'admission.

Les compresseurs 18 et 22 ont des roues respectives 32 et 34 disposées dans un circuit d'échappement 36 issu du collecteur d'échappement 14 et propres à être entraînées par les gaz d'échappement issus du moteur. Une vanne 38 à trois voies est intégrée dans le circuit 36. Dans une première position, la vanne envoie les gaz d'échappement vers la roue 34 et de là, vers la roue 32, pour entraîner les deux compresseurs 18 et 22. Dans une seconde position elle envoie directement les gaz d'échappement à la roue 32 pour entraîner seulement le compresseur 18.

Dans la première position, l'air extérieur AE à la pression atmosphérique est comprimé à basse pression par le compresseur amont 18, est ensuite refroidi dans le premier étage 24 du refroidisseur, est comprimé à haute pression par le compresseur 22, et est refroidi dans le second étage 26 du refroidisseur pour gagner le collecteur d'admission 12. Dans la seconde position, l'air extérieur est comprimé à basse pression par le compresseur 18 et est refroidi successivement par le premier étage 24 et le second étage 26 du refroidisseur pour gagner le collecteur d'admission 12, en contournant ainsi le compresseur aval 22. Comme on le verra plus loin, le refroidisseur 20 comporte des moyens de communication permettant d'isoler les étages 24 et 26 ou au contraire de les faire communiquer.

Ainsi, dans les deux positions, la circulation de l'air dans le circuit d'air d'admission et le refroidisseur s'effectue en série.

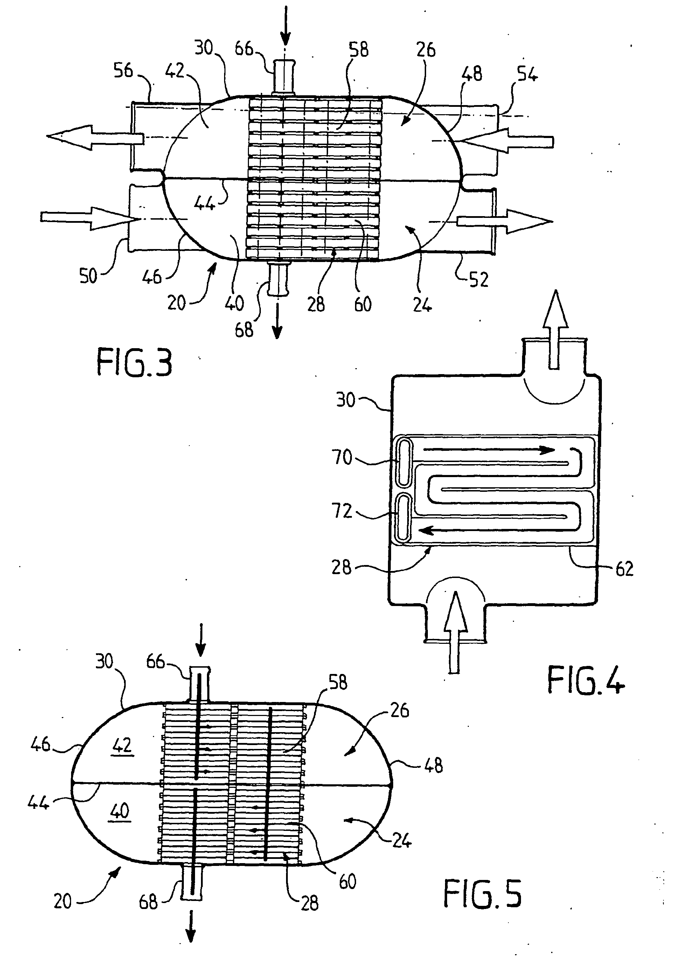

On se réfère maintenant aux figures 2 à 5 pour décrire le refroidisseur 20 dans une première forme de réalisation. Le premier étage 24 et le second étage 26 de refroidissement comprennent respectivement un premier conduit 40 et un second conduit 42 séparés par une cloison 44 (figures 3 et 5). Dans l'exemple, le premier conduit 40 est placé en dessous du second conduit 42 et la cloison 44 s'étend dans un plan généralement horizontal. Le boîtier 30 présente une forme allongée et il comporte deux extrémités opposées 46 et 48. Le premier conduit 40 comporte une entrée 50 et une sortie 52 formées respectivement à l'extrémité 46 et à l'extrémité 48. Le second conduit 42 comprend une entrée 54 et une sortie 56 formées respectivement à l'extrémité 48 et à l'extrémité 46 (figure 3). Il en résulte que l'entrée et la sortie du premier conduit sont opposées respectivement à l'entrée et à la sortie du second conduit de sorte que l'air d'admission circule dans les conduits (donc dans les étages de refroidissement) dans des sens opposés, c'est-à-dire à contre-courant, .comme montré par les flèches de la figure 3. Les entrées et sorties précitées sont définies ici par des tubulures issues du boîtier.

Le faisceau d'échangeur de chaleur 28 comprend une première partie 58 et une seconde partie 60 logées respectivement dans le second conduit 42 et le premier conduit 40 et séparées par la cloison 44 (figures 3 et 5). Cette cloison 44 peut être formée par le boîtier 30 et/ou le faisceau 28. Dans l'exemple, la cloison 44 est fixe, si bien que les deux conduits 40 et 42 sont en permanence séparés l'un de l'autre, sans possibilité de communication mutuelle.

Comme on peut le voir sur les figures 2 à 5, le faisceau 28 est formé d'un empilement de plaques 62 disposées par paire et d'intercalaires ondulés 64 (les intercalaires sont visibles sur la figure 2). Les plaques 62 délimitent des lames de circulation pour un liquide de refroidissement traversant le faisceau, ces lames alternant avec des canaux de circulation de l'air d'admission, ces derniers étant formés entre les ondulations des intercalaires. Le faisceau 28 est relié à une tubulure d'entrée 66 et à une tubulure de sortie 68 (figures 2, 3 et 5) pour permettre la circulation du liquide de refroidissement, ce dernier étant habituellement constitué par le liquide de refroidissement du moteur.

Comme on le voit sur la figure 5, le faisceau 28 est agencé pour que le liquide de refroidissement circule successivement dans les deux parties du faisceau, ici d'abord dans la partie 60 puis dans la partie 60 comme montré par les flèches de la figure 5.

La figure 4 fait apparaître la structure d'une plaque courante 62 comportant une entrée 70 et une sortie 72.et des cloisons pour permettre au liquide de refroidissement de définir un parcours de circulation ayant la forme d'au moins un U, ici la forme de deux U, la circulation s'effectuant à chaque fois entre deux plaques contiguës. La circulation du fluide est telle qu'elle s'effectue en sens opposé par rapport à la direction de circulation de l'air aussi bien dans la première partie que dans la seconde partie du faisceau (voir les flèches de la figure 4).

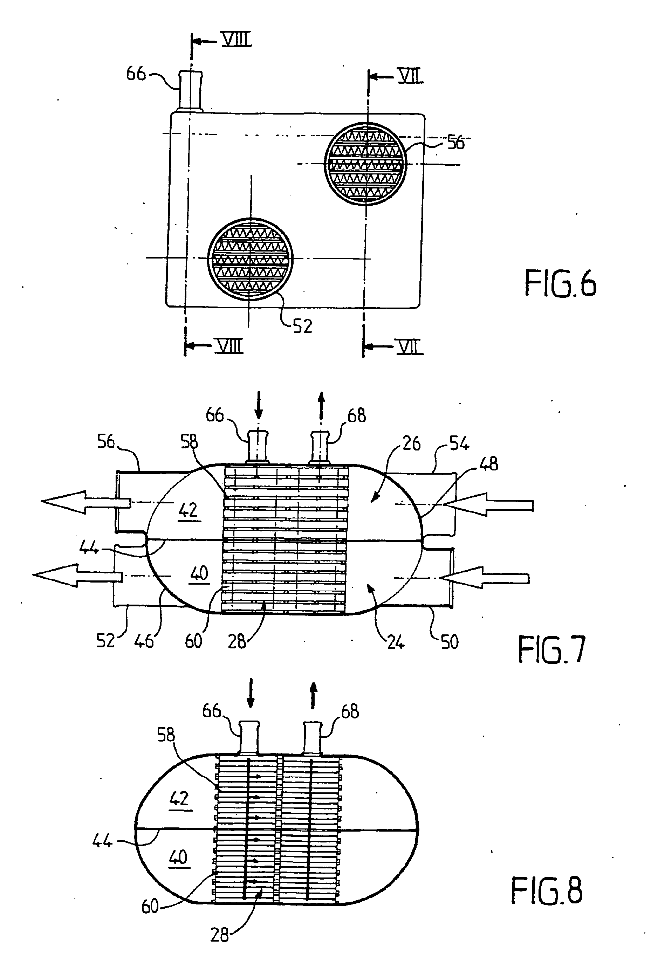

On se réfère maintenant aux figures 6 à 8 qui montrent une deuxième forme de réalisation de l'invention qui diffère essentiellement de la forme de réalisation des figures 2 à 5 par le fait que l'entrée 50 et la sortie 52 du premier conduit 40 sont respectivement du même côté que l'entrée 54 et la sortie 56 du second conduit 42. Autrement dit, les entrées 50 et 54 sont du côté de l'extrémité 48, tandis que les sorties 52 et 56 sont du côté de l'extrémité 46, si bien que l'air d'admission circule dans le même sens, (c'est-à-dire à co-courant) dans les deux conduits (figure 7). Dans l'exemple, les tubulures 66 et 68 du faisceau sont situées d'un même côté. Le faisceau est agencé pour que le liquide de refroidissement circule simultanément dans la première et la seconde partie du faisceau comme on le voit d'après les flèches de la figure 8.

Dans les deux formes de réalisation précédentes, la cloison 44 est fixe, si bien que les deux étages de refroidissement sont en permanence séparés l'un de l'autre, sans possibilité de communication.

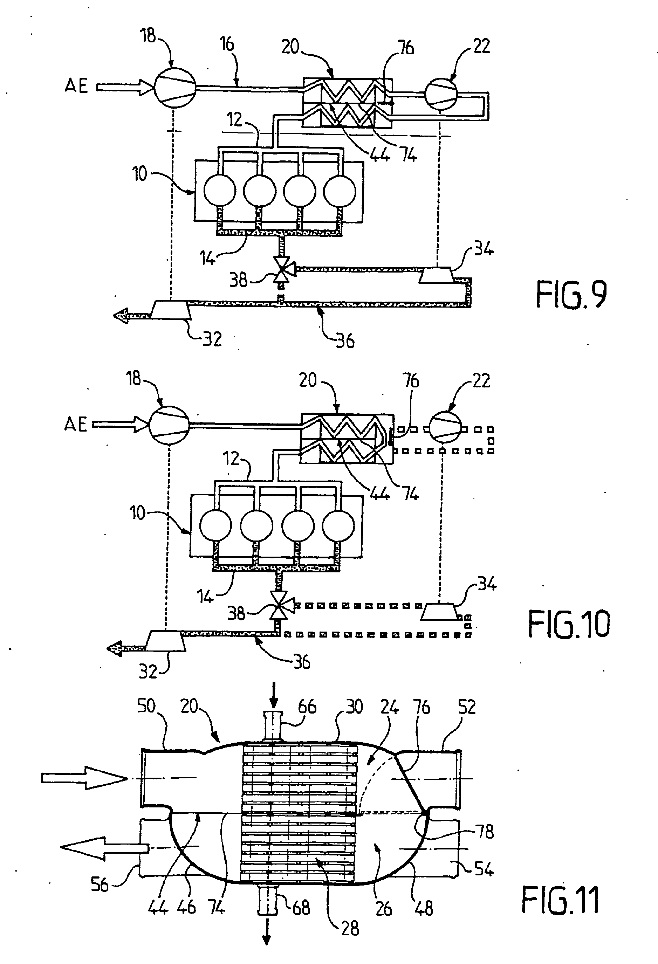

On se réfère maintenant aux figures 9 à 11 qui montrent une autre forme de réalisation, analogues à celles des figures 2 à 5, dans laquelle les entrées d'air respectives 50 et 54 du premier conduit 40 et du second conduit 42 sont disposées à des extrémités opposées du boîtier d'échangeur de chaleur, si bien que l'air d'admission circule à contre-courant dans les conduits 40 et 42. En outre, la cloison 44 du refroidisseur comporte une partie fixe 74 et une partie mobile 76, cette dernière étant réalisée sous la forme d'un volet pivotant déplaçable entre une première position (figure 9) en laquelle les conduits 40 et 42 ne peuvent communiquer et une seconde position (figure 10) en laquelle les deux conduits peuvent communiquer mutuellement.

La partie mobile 76 est située à l'une des extrémités du boîtier 30, ici l'extrémité 48. Dans la configuration de la figure 9, l'air d'admission passe successivement par le compresseur 18, le premier étage de refroidissement 24, le compresseur 22 et le deuxième étage de refroidissement 26. Les compresseurs 18 et 22 sont actifs, leurs roue respectives étant entraînées par les gaz d'échappement.

En revanche, dans le cas de la figure 10, l'air d'admission passe successivement par le compresseur 18, le premier étage 24 et le second étage 26 avant de gagner le collecteur d'admission 12 du moteur, le compresseur 22 n'étant pas actif. Seule la roue du compresseur 18 est entraînée par les gaz d'échappement.

La figure 11 montre la structure de la partie mobile 76 sous la forme d'un volet monté pivotant autour d'un axe 78. La partie mobile 76 est représentée en traits interrompus dans la première position (étages 24 et 26 isolés) et en traits pleins dans la seconde position (étages 24 et 26 communiquant mutuellement).

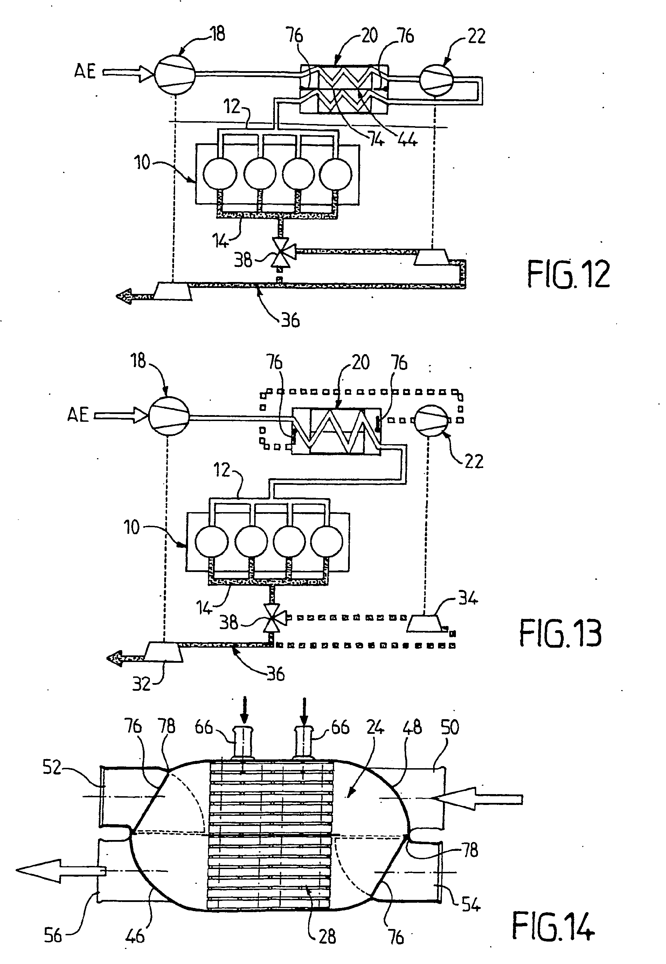

On se réfère maintenant aux figures 12 à 14 qui montrent une autre variante de réalisation dans laquelle la cloison comporte une partie fixe centrale 74 et deux parties mobiles 76 disposées respectivement aux deux extrémités du boîtier. Dans la position de la figure 12, les deux étages de refroidissement 24 et 26 sont isolés et le circuit fonctionne de la manière indiquée précédemment en référence à la figure 9. En revanche, dans la position de la figure 13, les deux parties mobiles 76 font communiquer les deux étages du refroidisseur de manière analogue au circuit de la figure 10. Dans ce dernier cas, on notera que les entrées d'air respectives 50 et 54 du premier conduit 40 et du second conduit 42 sont disposées à une même extrémité du boîtier d'échangeur de chaleur. La figure 14 montre les deux positions des parties mobiles 76, respectivement en traits interrompus et en traits continus.

L'invention permet ainsi de regrouper les deux étages de refroidissement au sein d'un même boîtier d'échangeur de chaleur partageant un même faisceau d'échange de chaleur d'où il résulte les avantages mentionnés précédemment.

L'invention n'est pas limitée aux formes de réalisation décrite précédemment et s'étend à d'autres variantes. En particulier, le faisceau d'échangeur de chaleur n'est pas limité à une structure à plaques et intercalaires ondulés et pourrait être formé d'un faisceau de tubes.

En outre, on pourrait prévoir que les étages de refroidissement de l'échangeur de chaleur sont traversés par de l'air provenant de deux circuits indépendants comme, par exemples, deux boucles de suralimentation différentes.

Il est possible également d'intégrer directement le boîtier du refroidisseur au plenum d'admission du moteur.

## Revendications

1. Refroidisseur d'air d'admission pour un moteur thermique turbocompressé à deux étages de suralimentation, **caractérisé en ce qu'**il comprend un premier étage de refroidissement (24) et un second étage de refroidissement (26) traversés par de l'air extérieur et /ou de l'air d'admission et regroupés dans un seul boîtier d'échangeur de chaleur (30) et partageant un faisceau d'échangeur de chaleur (28) commun, logé dans le boîtier d'échangeur de chaleur (30) et traversé par un liquide de refroidissement et **en ce que** le premier étage de refroidissement (24) et le second étage de refroidissement (26) comprennent respectivement un premier conduit (40) et un second conduit (42) séparés par une cloison (44) et présentant chacun une entrée (50 ; 54) et une sortie (52 ; 56) pour l'air d'admission, et **en ce que** le faisceau d'échangeur de chaleur (28) comprend une première partie (58) et une seconde partie (60) logées respectivement dans le premier conduit (40) et le second conduit (42).

2. Refroidisseur d'air d'admission selon la revendication 1, **caractérisé en ce que** l'entrée (50) et la sortie (52) du premier conduit (40) sont opposées respectivement à l'entrée (54) et à la sortie (56) du second conduit (42) de sorte que l'air d'admission y circule dans des sens opposés, et **en ce que** le faisceau (28) d'échangeur de chaleur est agencé pour que le liquide de refroidissement circule successivement dans la première partie (58) et la seconde partie (60) du faisceau.

3. Refroidisseur d'air d'admission selon la revendication 1, **caractérisé en ce que** l'entrée (50) et la sortie (52) du premier conduit (40) sont respectivement du même côté que l'entrée (54) et la sortie (56) du second conduit (42), de sorte que l'air d'admission y circule dans le même sens, et **en ce que** le faisceau (28) d'échangeur de chaleur est agencé pour que le liquide de refroidissement circule simultanément dans la première partie (58) et la seconde partie (60) du faisceau d'échangeur de chaleur (28).

4. Refroidisseur d'air d'admission selon l'une des revendications 2 et 3, **caractérisé en ce que** le faisceau d'échangeur de chaleur (28) est agencé pour que le liquide de refroidissement circule en sens opposé à l'air d'admission aussi bien dans la première partie (58) que dans la seconde partie (60) du faisceau d'échangeur de chaleur (28).

5. Refroidisseur d'air d'admission selon l'une des revendications 1 à 4, **caractérisé en ce que** le faisceau (28) d'échangeur de chaleur comprend un empilement de plaques (62) et d'intercalaires ondulés (64) délimitant des lames de circulation du liquide de refroidissement alternant avec des canaux de circulation de l'air d'admission.

6. Refroidisseur d'air d'admission selon la revendication 5, **caractérisé en ce que** les lames de circulation du liquide de refroidissement, formées chacune entre deux plaques (62) contiguës, délimitent un parcours de circulation ayant la forme d'au moins un U.

7. Refroidisseur d'air d'admission selon l'une des revendications 1 à 6, **caractérisé en ce que** la cloison (44) est formée par le boîtier (30) et/ou le faisceau (28).

8. Refroidisseur d'air d'admission selon l'une des revendications 1 à 7, **caractérisé en ce que** la cloison (44) est une cloison fixe.

9. Refroidisseur d'air d'admission selon l'une des revendications 1 à 7, **caractérisé en ce que** la cloison (44) comprend une partie fixe (74) et au moins une partie mobile (76) déplaçable entre une première position en laquelle le premier conduit (40) et le second conduit (42) sont isolés et une seconde position en laquelle le premier conduit (40) et le second conduit (42) communiquent.

10. Refroidisseur d'air d'admission selon la revendication 9, **caractérisé en ce que** les entrées d'air respectives (50 ; 54) du premier conduit (40) et du second conduit (42) sont disposées à des extrémités opposées du boîtier d'échangeur de chaleur, et **en ce que** la cloison comprend une seule partie mobile (76) située à l'une des extrémités du boîtier d'échangeur de chaleur.

11. Refroidisseur d'air d'admission selon la revendication 9, **caractérisé en ce que** les entrées d'air respectives (50 ; 54) du premier conduit (40) et du second conduit (42) sont disposées à une même extrémité du boîtier d'échangeur de chaleur, et **en ce que** la cloison comprend deux parties mobiles (76) situées respectivement aux deux extrémités du boîtier d'échangeur de chaleur.

12. Refroidisseur d'air d'admission selon l'une des revendications 9 à 11, **caractérisé en ce que** la partie mobile (76) est un volet pivotant.

13. Circuit d'air d'admission pour un moteur thermique turbocompressé à deux étages de suralimentation, comprenant un compresseur amont (18) à basse pression et un compresseur aval (22) à haute pression, **caractérisé en ce qu'**il comprend en outre un refroidisseur d'air d'admission (20) selon l'une des revendications 1 à 12, dont le premier étage de
refroidissement (24) est interposé entre le compresseur amont et le compresseur aval, tandis que le second étage de refroidissement (26) est relié en sortie du compresseur aval.

14. Circuit d'air d'admission selon la revendication 13, dans lequel le refroidisseur d'air d'admission (20) est muni d'une cloison ayant au moins une partie mobile (76) comme défini dans l'une des revendications 10 à 12, **caractérisé en ce que**, dans la première position, l'air d'admission est propre à passer successivement par le compresseur amont (18), le premier étage de refroidissement (24), le compresseur aval (22), puis le second étage de refroidissement (26), tandis que, dans la seconde position, l'air d'admission est propre à passer successivement par le compresseur amont (18), le premier étage de refroidissement (24), puis le second étage de refroidissement (26), en contournant le compresseur aval (22).

## Claims

1. Intake air cooler for a dual-stage turbocharged internal combustion engine, **characterized in that** it comprises a first cooling stage (24) and a second cooling stage (26) traversed by external air and/or intake air and grouped together in a single heat exchanger housing (30) and sharing a common heat exchanger bundle (28), accommodated in the heat exchanger housing (30) and traversed by a cooling liquid, **in that** the first cooling stage (24) and the second cooling stage (26) respectively comprise a first conduit (40) and a second conduit (42) separated by a partition (44) and each having an inlet (50; 54) and an outlet (52; 56) for the intake air, and **in that** the heat exchanger bundle (28) comprises a first part (58) and a second part (60) accommodated respectively in the first conduit (40) and the second conduit (42).

2. Intake air cooler according to Claim 1, **characterized in that** the inlet (50) and the outlet (52) of the first conduit (40) are respectively opposite the inlet (54) and the outlet (56) of the second conduit (42) so that the intake air flows therein in opposite directions, and **in that** the heat exchanger bundle (28) is arranged so that the cooling liquid flows in succession in the first part (58) and the second part (60) of the bundle.

3. Intake air cooler according to Claim 1, **characterized in that** the inlet (50) and the outlet (52) of the first conduit (40) are respectively on the same side as the inlet (54) and the outlet (56) of the second conduit (42), so that the intake air flows therein in the same direction, and **in that** the heat exchanger bundle (28) is arranged so that the cooling liquid flows simultaneously in the first part (58) and the second part (60) of the heat exchanger bundle (28).

4. Intake air cooler according to either of Claims 2 and 3, **characterized in that** the heat exchanger bundle (28) is arranged so that the cooling liquid flows in the opposite direction to the intake air both in the first part (58) and in the second part (60) of the heat exchanger bundle (28).

5. Intake air cooler according to one of Claims 1 to 4, **characterized in that** the heat exchanger bundle (28) comprises a stack of plates (62) and corrugated inserts (64) bounding cooling liquid flow streams alternating with intake air flow channels.

6. Intake air cooler according to Claim 5, **characterized in that** the cooling liquid flow streams, each formed between two contiguous plates (62), bound a flow path having at least one U-shape.

7. The intake air cooler according to one of Claims 1 to 6, **characterized in that** the partition (44) is formed by the housing (30) and/or the bundle (28).

8. Intake air cooler according to one of Claims 1 to 7, **characterized in that** the partition (44) is a fixed partition.

9. Intake air cooler according to one of Claims 1 to 7, **characterized in that** the partition (44) comprises a fixed part (74) and at least one mobile part (76) movable between a first position in which the first conduit (40) and the second conduit (42) are isolated and a second position in which the first conduit (40) and the second conduit (42) communicate.

10. Intake air cooler according to Claim 9, **characterized in that** the respective air inlets (50; 54) of the first conduit (40) and the second conduit (42) are placed at opposite ends of the heat exchanger housing, and **in that** the partition comprises a single mobile part (76) located at one of the ends of the heat exchanger housing.

11. Intake air cooler according to Claim 9, **characterized in that** the respective air inlets (50; 54) of the first conduit (40) and the second conduit (42) are placed at the same end of the heat exchanger housing, and **in that** the partition comprises two mobile parts (76) located respectively at the two ends of the heat exchanger housing.

12. Intake air cooler according to one of Claims 9 to 11, **characterized in that** the mobile part (76) is a pivoting flap.

13. Intake air circuit for a dual-stage turbocharged internal combustion engine, comprising a low pressure upstream compressor (18) and a high pressure downstream compressor (22), **characterized in that** it further comprises an intake air cooler (20) according to one of Claims 1 to 12, whereof the first cooling stage (24) is inserted between the upstream compressor and the downstream compressor, while the second cooling stage (26) is connected at the outlet of the downstream compressor.

14. Intake air circuit according to Claim 13, in which the intake air cooler (20) is equipped with a partition having at least one mobile part (76) as defined in one of Claims 9 to 12, **characterized in that**, in the first position, the intake air is capable of passing in succession through the upstream compressor (18), the first cooling stage (24), the downstream compressor (22), then the second cooling stage (26), while, in the second position, the intake air is capable of passing in succession through the upstream compressor (18), the first cooling stage (24), then the second cooling stage (26), while circumventing the downstream compressor (22).

## Patentansprüche

1. Ansaugluftkühler für einen Turbo-Verbrennungsmotor mit zwei Ladestufen, **dadurch gekennzeichnet, dass** er eine erste Kühlstufe (24) und eine zweite Kühlstufe (26) enthält, die von Außenluft und/oder von Ansaugluft durchquert werden und in einem einzigen Wärmetauschergehäuse (30) zusammengefasst sind und sich ein gemeinsames Wärmetauscherbündel (28) teilen, das im Wärmetauschergehäuse (30) angeordnet ist und von einer Kühlflüssigkeit durchquert wird, und dass die erste Kühlstufe (24) und die zweite Kühlstufe (26) je einen ersten Kanal (40) und einen zweiten Kanal (42) enthalten, die durch eine Trennwand (44) getrennt sind und je einen Einlass (50; 54) und einen Auslass (52; 56) für die Ansaugluft aufweisen, und dass das Wärmetauscherbündel (28) einen ersten Teil (58) und einen zweiten Teil (60) enthält, die im ersten Kanal (40) bzw. im zweiten Kanal (42) angeordnet sind.

2. Ansaugluftkühler nach Anspruch 1, **dadurch gekennzeichnet, dass** der Einlass (50) und der Auslass (52) des ersten Kanals (40) dem Einlass (54) bzw. dem Auslass (56) des zweiten Kanals (42) entgegengesetzt liegen, so dass die Ansaugluft dort in entgegengesetzten Richtungen zirkuliert, und dass das Wärmetauscherbündel (28) so angeordnet ist, dass die Kühlflüssigkeit nacheinander im ersten Teil (58) und im zweiten Teil (60) des Bündels zirkuliert.

3. Ansaugluftkühler nach Anspruch 1, **dadurch gekennzeichnet, dass** der Einlass (50) und der Auslass (52) des ersten Kanals (40) sich auf der gleichen Seite befinden wie der Einlass (54) bzw. der Auslass (56) des zweiten Kanals (42), so dass die Ansaugluft dort in gleicher Richtung zirkuliert, und dass das Wärmetauscherbündel (28) so angeordnet ist, dass die Kühlflüssigkeit gleichzeitig im ersten Teil (58) und im zweiten Teil (60) des Wärmetauscherbündels (28) zirkuliert.

4. Ansaugluftkühler nach einem der Ansprüche 2 und 3, **dadurch gekennzeichnet, dass** das Wärmetauscherbündel (28) so angeordnet ist, dass die Kühlflüssigkeit sowohl im ersten Teil (58) als auch im zweiten Teil (60) des Wärmetauscherbündels (28) in Gegenrichtung zur Ansaugluft zirkuliert.

5. Ansaugluftkühler nach einem der Ansprüche 1 bis 4, **dadurch gekennzeichnet, dass** das Wärmetauscherbündel (28) einen Stapel von Platten (62) und gewellten Zwischenlagen (64) aufweist, die Zirkulationsräume der Kühlflüssigkeit begrenzen, die mit Zirkulationskanälen der Ansaugluft abwechseln.

6. Ansaugluftkühler nach Anspruch 5, **dadurch gekennzeichnet, dass** die Zirkulationsräume der Kühlflüssigkeit, die je zwischen zwei aneinanderstoßenden Platten (62) geformt sind, einen Zirkulationsverlauf begrenzen, der die Form mindestens eines U hat.

7. Ansaugluftkühler nach einem der Ansprüche 1 bis 6, **dadurch gekennzeichnet, dass** die Trennwand (44) vom Gehäuse (30) und/oder vom Bündel (28) geformt wird.

8. Ansaugluftkühler nach einem der Ansprüche 1 bis 7, **dadurch gekennzeichnet, dass** die Trennwand (44) eine ortsfeste Trennwand ist.

9. Ansaugluftkühler nach einem der Ansprüche 1 bis 7, **dadurch gekennzeichnet, dass** die Trennwand (44) einen ortsfesten Teil (74) und mindestens einen beweglichen Teil (76) enthält, der zwischen einer ersten Stellung, in der der erste Kanal (40) und der zweite Kanal (42) isoliert sind, und einer zweiten Stellung verschiebbar ist, in der der erste Kanal (40) und der zweite Kanal (42) miteinander in Verbindung stehen.

10. Ansaugluftkühler nach Anspruch 9, **dadurch gekennzeichnet, dass** die Lufteinlässe (50; 54) des ersten Kanals (40) bzw. des zweiten Kanals (42) an entgegengesetzten Enden des Wärmetauschergehäuses angeordnet sind, und dass die Trennwand einen einzigen beweglichen Teil (76) enthält, der sich an einem der Enden des Wärmetauschergehäuses befindet.

11. Ansaugluftkühler nach Anspruch 9, **dadurch gekennzeichnet, dass** die Lufteinlässe (50; 54) des ersten Kanals (40) bzw. des zweiten Kanals (42) am gleichen Ende des Wärmetauschergehäuses angeordnet sind, und dass die Trennwand zwei bewegliche Teile (76) enthält, die sich an den zwei Enden des Wärmetauschergehäuses befinden.

12. Ansaugluftkühler nach einem der Ansprüche 9 bis 11, **dadurch gekennzeichnet, dass** der bewegliche Teil (76) eine Schwenkklappe ist.

13. Ansaugluftkreislauf für einen Turbo-Verbrennungsmotor mit zwei Ladestufen, der einen vorderen Niederdruckverdichter (18) und einen hinteren Hochdruckverdichter (22) enthält, **dadurch gekennzeichnet, dass** er außerdem einen Ansaugluftkühler (20) nach einem der Ansprüche 1 bis 12 enthält, dessen erste Kühlstufe (24) zwischen den vorderen Verdichter und den hinteren Verdichter eingefügt ist, während die zweite Kühlstufe (26) mit dem Auslass des hinteren Verdichters verbunden ist.

14. Ansaugluftkreislauf nach Anspruch 13, bei dem der Ansaugluftkühler (20) mit einer Trennwand versehen ist, die mindestens einen beweglichen Teil (76) wie in einem der Ansprüche 9 bis 12 definiert hat, **dadurch gekennzeichnet, dass** in der ersten Stellung die Ansaugluft nacheinander durch den vorderen Verdichter (18), die erste Kühlstufe (24), den hinteren Verdichter (22), dann die zweite Kühlstufe (26) gehen kann, während in der zweiten Stellung die Ansaugluft nacheinander durch den vorderen Verdichter (18), die erste Kühlstufe (24), dann die zweite Kühlstufe (26) gehen kann, indem sie den hinteren Verdichter (22) umgeht.
